# EUROPÄISCHE PATENTANMELDUNG

(11) **EP 4 760 020 A1**
(43) Veröffentlichungstag der Anmeldung: **17.06.2026**
(21) Anmeldenummer: 25223037.0
(22) Anmeldetag: 12.12.2025
(51) Int. Cl.: E04D 1/12, E04D 1/00, E04D 1/30

(54) **DACHREDUZIERADAPTER UND DACH**

(30) Priorität: 12.12.2024 CZ 20240482
(71) Anmelder: Wienerberger AG, 1100 Wien (AT)
(72) Erfinder: FREJVALD, Daniel, 14700 Praha (CZ)
(74) Vertreter: Burger, Hannes Alfred

(57) **Zusammenfassung**

Die Erfindung betrifft einen Dachreduktionsadapter, insbesondere einen Dachreduktionsadapter (7) zum Überdecken des freien Raums zwischen mindestens einer Reihe von verlegten Dachziegeln und dem Raum, in dem sich ein nicht standardmäßiges Dachelement befindet, bei dem es sich insbesondere um ein in die Reihe der Dachziegel integriertes Photovoltaik-Dachmodul handelt. Der Dachreduktionsadapter (7) umfasst einen flachen Teil , an dessen Seitenflanke ein Befestigungsteil angeordnet ist, wobei der flache Teil auf seiner Rückseite (5) mindestens zwei vertikale Lamellen (1) aufweist, zwischen denen sich ein Trennraum (6) zum Abtrennen der überschüssigen Fläche (18) des flachen Teils und damit zum Begrenzen der Breite des flachen Teils zum kontinuierlichen Überdecken des freien Raums befindet. Die Erfindung betrifft weiters ein Dach, insbesondere ein Dach mit mindestens einer Reihe von Dachziegeln und einem nicht standardmäßigen Dachelement, bei dem es sich insbesondere um ein in die Reihe der Dachziegel integriertes Photovoltaik-Dachmodul handelt, wobei im freien Raum zwischen mindestens einer Reihe von verlegten Dachziegeln und dem Raum, in dem sich das nicht standardmäßige Dachelement befindet, ein den freien Raum überdeckender Dachreduktionsadapter (7) angeordnet ist.

## Beschreibung

### Technikbereich

Die Erfindung betrifft einen Dachreduktionsadapter, insbesondere einen Dachreduktionsadapter zum Überdecken des freien Raums zwischen Reihen von Dachziegeln und dem Raum, in dem sich ein nicht standardmäßiges Dachelement befindet, sowie ein Dach, das einen Dachreduktionsadapter zum Überdecken des freien Raums enthält.

### Stand der Technik

Aus dem Stand der Technik ist eine Reihe von Dachkonstruktionen bekannt, die aus Dachziegeln mit Standardabmessungen bestehen, die in Form von ganzen Dachziegeln und halben Dachziegeln hergestellt werden.

Dies gilt auch für den Tondachziegel, der aus dem Patentdokument EP 1 820 918 bekannt ist. Dieser Tondachziegel hat einen Kopfbereich mit einer Querverfalzung an der Außenseite. Außerdem hat er einen Fußbereich mit einer Fußrippe zwischen einer Wasserfalzseite mit doppelter Längsverfalzung an der Außenseite und einer konvexen Deckfalzseite mit einer dazu komplementären doppelten Falzung an der Innenseite sowie einem sich von der kopfseitigen Querverfalzung bis zum Fußbereich erstreckenden Feld. Dieses Feld hat ungefähr in der Mitte zwischen dem Wasserfalzrand und dem Deckfalzrand vom Kopfende zum Fußende eine konvexe Welle, die mindestens ungefähr das gleiche Profil wie die mittlere Welle des Kopfes hat und aus Querrippen besteht, die vom Fuß der mittleren Welle auf der Wasserfalzseite bis zu ihrem Scheitelpunkt eine erste Höhe haben. Anschließend haben sie bis zum Fuß der Welle auf der Deckfalzseite eine zweite, geringere Höhe. Die Querrippen haben vom Fuß der konvexen Deckfalzseiten bis zu ihrem Scheitelpunkt eine erste Höhe und anschließend bis zum Deckfalzungrand eine zweite, geringere Höhe.

Zwischen diesen Dachziegeln können nicht standardmäßige Dachelemente angeordnet werden, die zwischen den in Reihen angeordneten Dachziegeln angeordnet sind.

Diese nicht standardmäßigen Dachelemente können in ihren Abmessungen den Abmessungen der Dachziegel entsprechen, sodass sie einfach zwischen diese eingesetzt werden können. Zu diesen Dachelementen gehört der Solardachziegel gemäß dem Patent EP 3 118 387, der einfach in eine Reihe von Dachziegeln eingesetzt werden kann, indem er Stück für Stück den vorhandenen Dachziegel ersetzt.

Ein technisches Problem entsteht, wenn ein nicht standardmäßiges Dachelement verwendet wird, dessen Abmessungen und Anordnung auf dem Dach die Anordnung der Standardziegel und Halbziegel, aus denen das Dach normalerweise besteht, stören. Ein solches nicht standardmäßiges Dachelement kann ein photovoltaisches Dachmodul sein.

Dachziegel werden immer auf die Dachkonstruktion gelegt, wobei es nicht immer gelingt, einen ganzen Ziegel oder einen Halbziegel auf ein nicht standardmäßiges Dachelement zu legen, wenn die Ziegel von der Giebelseite aus verlegt werden. Der Hauptnachteil des aktuellen Stands der Technik besteht in diesem Fall darin, dass der Dachziegel durch einen Schnitt angepasst werden muss. Dadurch wird die seitliche Verriegelung der Dachziegel entfernt, was zu Undichtigkeiten im Unterdach führen kann. Aus diesem Grund wird der zugeschnittene Ziegel mit Schrauben befestigt und mit Dichtungsmasse abgedichtet. Die derzeitige Lösung ist jedoch nicht systemisch und kann daher nicht garantiert werden.

Das Ziel der Erfindung ist es, eine Konstruktionslösung zu entwickeln, die einfach und kostengünstig ist und es ermöglicht, den nicht standardmäßigen freien Raum zwischen dem Dachziegel und dem nicht standardmäßigen Dachelement auszufüllen, wodurch eine Dichtigkeit gegen Eindringen von Wasser gewährleistet wird, die der Dichtigkeit der Verbindung zweier Standarddachziegel entspricht.

### Wesen der Erfindung

Die genannten Mängel werden durch einen Dachreduktionsadapter weitgehend beseitigt, insbesondere durch einen Dachreduktionsadapter zum Überdecken des freien Raums zwischen mindestens einer Reihe von Dachziegeln und dem Raum, in dem sich ein nicht standardmäßiges Dachelement befindet, bei dem es sich insbesondere um ein in die Reihe der Dachziegel integriertes Photovoltaik-Dachmodul handelt, deren Wesen gemäß der Erfindung darin besteht, dass sie einen flachen Teil enthält, an dessen Seitenflanke ein Befestigungsteil angeordnet ist, wobei der flache Teil auf seiner Rückseite mindestens zwei vertikale Lamellen enthält, zwischen denen sich ein Trennraum befindet, um die überschüssige Fläche des flachen Teils abzutrennen und dadurch die Breite des flachen Teils genau auf die Überdeckung des freien Raums zu begrenzen. Die Lamellen ermöglichen eine beliebige Teilung des Adapters in Längsrichtung. Der Vorteil besteht darin, dass die an der Unterseite angeordneten Lamellen durch einen Schnitt eine einfache Anpassung des Dachreduktionsadapters an die zum Überdecken des freien Raums erforderliche Größe ermöglichen.

Es ist vorteilhaft, wenn mindestens eine äußere Lamelle nach dem Abtrennen der überschüssigen Fläche ihres flachen Teils eine seitliche Verriegelung gegen das Eindringen von Wasser und Verwehen von Schnee sowie gegen windgetriebenem Regen bildet, wobei es am vorteilhaftesten erscheint, wenn die Verriegelung aus mindestens zwei äußeren Lamellen besteht. Der Vorteil besteht darin, dass nach dem Abtrennen der überschüssigen Fläche seines flachen Teils die seitliche Verriegelung nicht entfernt wird, wobei der Dachreduktionsadapter den Raum zwischen den Dachziegeln und beispielsweise in das Dach integrierten Photovoltaikmodulen ausfüllt. Dadurch wird eine dichte Verbindung mit der Dachdeckung durch eine neu geschaffene seitliche Nut gewährleistet, die genau in die seitliche Verriegelung des angrenzenden Dachziegels oder in die seitliche Nut, insbesondere in einen seitlichen Fügefalz, eines nicht standardmäßigen Dachelements passt.

Weiterhin ist es vorteilhaft, wenn der Befestigungsabschnitt mindestens zwei Befestigungsöffnungen aufweist, die in mindestens einer seitlichen Entwässerungsnut angeordnet sind. Der Vorteil besteht darin, dass die Öffnungen eine einfache und genaue Befestigung des Adapters an der Dachkonstruktion ermöglichen.

Es ist auch vorteilhaft, wenn die seitliche Verriegelung so angeordnet ist, dass sie die seitliche Verriegelung, insbesondere einen seitlichen Fügefalz, des angrenzenden Dachziegels oder die seitliche Verriegelung, insbesondere einen seitlichen Fügefalz, des nicht standardmäßigen Dachelements aufnehmen kann.

Gleichzeitig ist es vorteilhaft, wenn der flache Teil einen sichtbaren Teil aufweist, der eben und glatt ist. Der Vorteil besteht darin, dass der Adapter beispielsweise mit dem Photovoltaikmodul optisch eine Linie bildet. Der Adapter dient somit als optischer Übergang zwischen der Dachdeckung und dem Photovoltaikmodul.

Vorteilhaft ist es außerdem, wenn der flache Teil auf seiner Rückseite eine Längsdichtungsrippe aufweist.

Es ist auch vorteilhaft, wenn der flache Teil an der Unterseite der Rückseite eine stirnseitige Vorderrippe aufweist. Diese Rippe dient dazu, das Eindringen von Niederschlägen zu minimieren, und liegt an der Kopfnut der Dachdeckung in der darunter liegenden Reihe an.

Mindestens eine der am tiefsten gelegenen Befestigungsöffnungen ist vorzugsweise blind.

Vorteilhaft ist auch, wenn die Befestigungsöffnung mit einem erhöhten Rand versehen ist, wobei ihr innerer Teil konisch versenkt ist, was das mögliche Durchlaufen von Regenwasser aus der Entwässerungsnut begrenzt.

Der Dachreduktionsadapter weist vorteilhafterweise in seinem unteren Teil eine Aussparung auf, die eine Entwässerungsnut bildet.

Entsprechend einer vorteilhaften Ausführungsform kann vorgesehen sein, dass der flache Teil auf seiner Rückseite mindestens fünf der genannten vertikalen Lamellen aufweist und dass sich diese Lamellen über mehr als 70%, vorzugsweise über mehr als 80% einer Gesamtlänge des Dachreduktionsadapters erstrecken und vorzugsweise in einem vorbestimmten Freistellungsmaß vor einer Oberkante des Dachreduktionsadapters enden. Ein solcher Adapterziegel kann rasch und dennoch mit hoher Dichtigkeit in ein Raster bzw. in einen Verbund aus Standard-Dachziegeln und aus einem nicht standardmäßigen Dachelement eingebaut werden.

Darüber hinaus kann vorgesehen sein, dass die genannten vertikalen Lamellen mit einem Achsabstand zwischen den benachbarten Lamellen angeordnet sind der identisch oder im Wesentlichen identisch zu einem Achsabstand zwischen zwei oder mehr vertikalen Entwässerungsnuten im seitlichen Befestigungsteil des Dachreduktionsadapters ist. Dies ermöglicht eine systemische Anpassung und einen systemischen Einbau des Dachreduktionsadapters in ein Raster bzw. in einen Verbund aus Standard-Dachziegeln und aus einem nicht standardmäßigen Dachelement, wobei dieser Einbau rasch und mit verbesserter bzw. hoher Dichtigkeit umgesetzt werden kann.

Die genannten Mängel des Standes der Technik werden durch das erfindungsgemäße Dach weitgehend beseitigt und die Ziele der Erfindung erfüllt, insbesondere durch ein Dach, das mindestens eine Reihe von Dachziegeln und ein nicht standardmäßiges Dachelement umfasst, bei dem es sich insbesondere um ein in die Reihe von Dachziegeln integriertes Photovoltaik-Dachmodul handelt, wobei der freie Raum zwischen mindestens einer Reihe von verlegten Dachziegeln und dem Raum, in dem sich das nicht standardmäßige Dachelement befindet, den oben genannten Dachreduktionsadapter enthält.

Es ist vorteilhaft, wenn der Dachreduktionsadapter nach Entfernung seiner überschüssigen Fläche den freien Raum zwischen mindestens einer Reihe von Falzdachziegeln und dem Raum, in dem sich das nicht standardmäßige Dachelement befindet, genau überdeckt, wobei er an der Dachkonstruktion befestigt ist und mit seiner seitlichen Verriegelung in die seitliche Nut, insbesondere in einen seitlichen Fügefalz, des angrenzenden Dachziegels einrastet.

Alternativ oder in Kombination zur zuvor genannten Maßnahme ist es vorteilhaft, wenn der Dachreduktionsadapter nach Entfernung seiner überschüssigen Fläche den freien Raum zwischen mindestens einer Reihe von verlegten Dachziegeln und dem Raum, in dem sich das nicht standardmäßige Dachelement befindet, genau überdeckt, wobei er an der Dachkonstruktion befestigt ist und mit seiner seitlichen Verriegelung in die seitliche Nut, insbesondere in einen seitlichen Fügefalz, des nicht standardmäßigen Dachelements einrastet.

Der Hauptvorteil des Dachreduktionsadapters und des Daches, auf dem er verwendet wird, besteht darin, dass durch eine einfache Anpassung ein Adapter hergestellt werden kann, der den freien Raum, dessen Breite geringer ist als die Standardbreite der Dachziegel, genau überdeckt. Die vertikalen Lamellen, die auch nach dem Zuschneiden der Breite des Adapters an dessen Rand verbleiben, liegen auf den angrenzenden Nuten auf und gewährleisten die Dichtheit. Ihre Anzahl ermöglicht eine beliebige Teilung, ohne dass eine zusätzliche Abdichtung der Kontaktstelle des Adapters erforderlich ist. Der Dachreduktionsadapter kann aus metallischen und nichtmetallischen Werkstoffen hergestellt werden. Der Zweck des Dachreduktionsadapters und des Daches besteht darin, durch beliebiges Kürzen des Adapters den Bereich zwischen beispielsweise dem Photovoltaikmodul und der Dachdeckung zu definieren, wo es aus kompositorischen und anderen Gründen nicht möglich ist, ganze oder halbe Dachziegel zu verwenden.

### Übersicht der Abbildungen in der Zeichnung

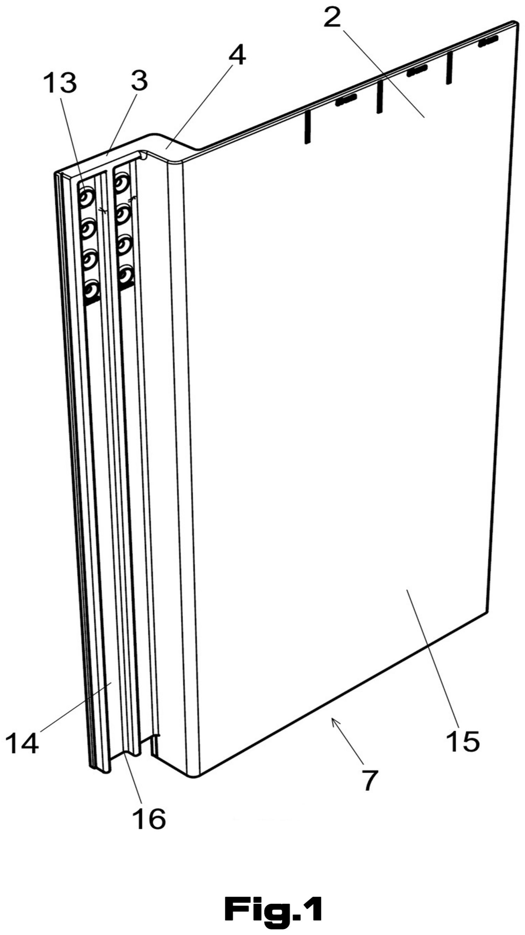

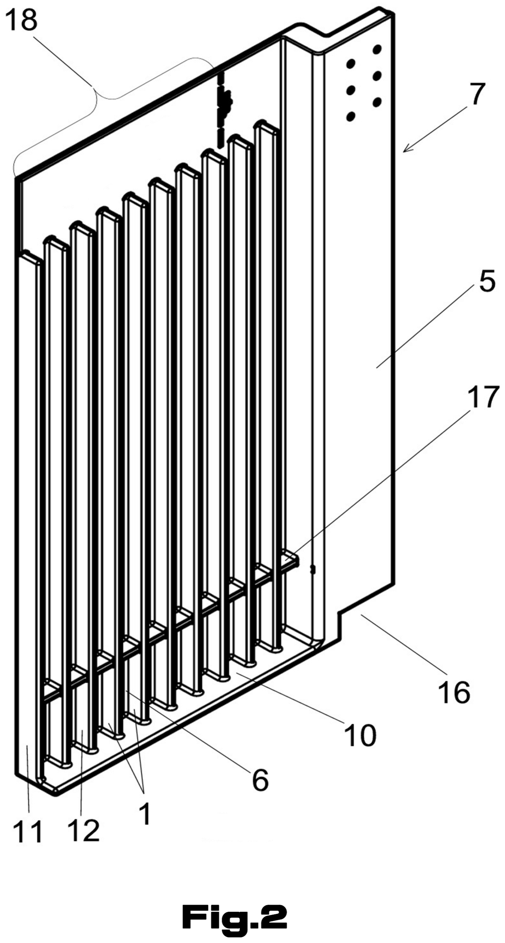

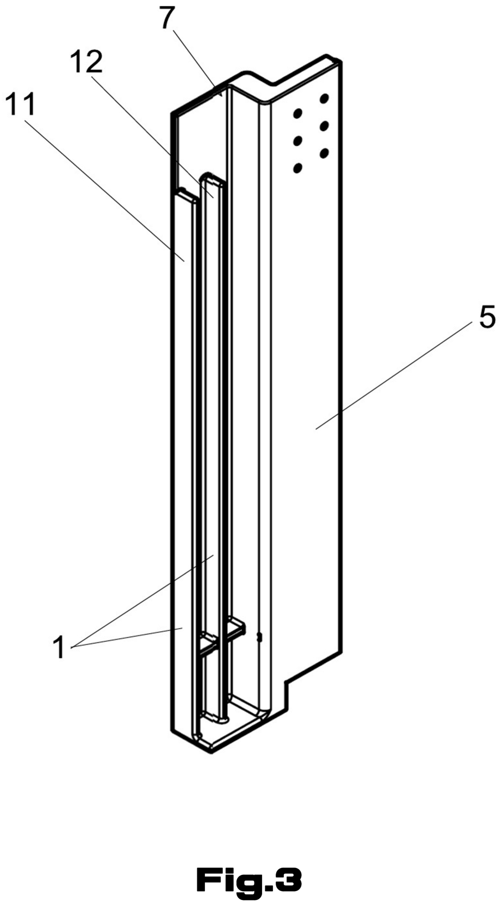

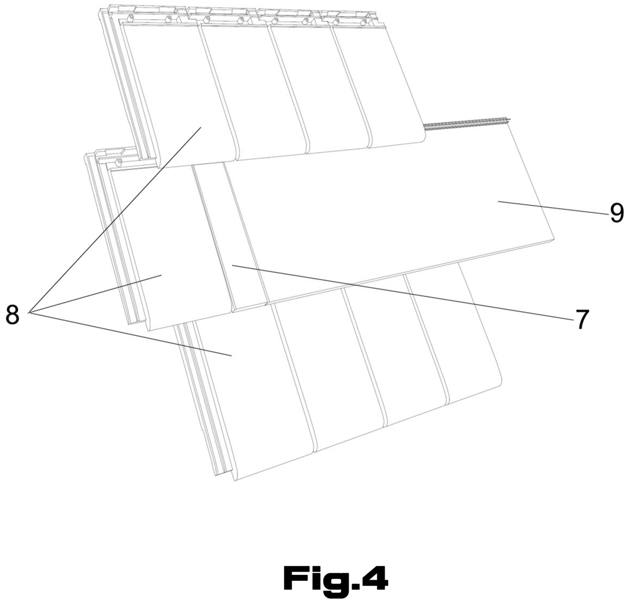

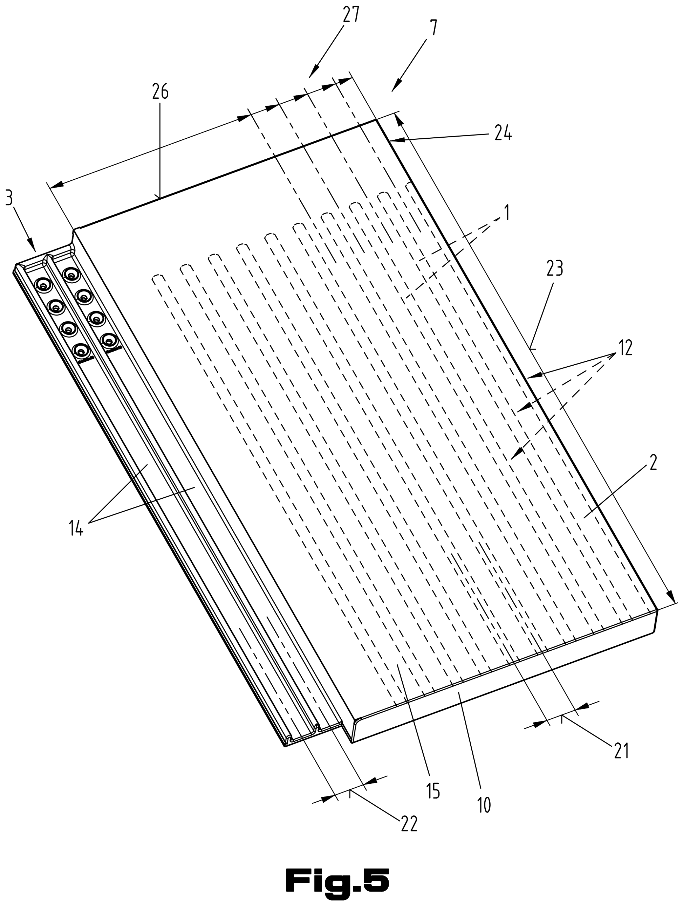

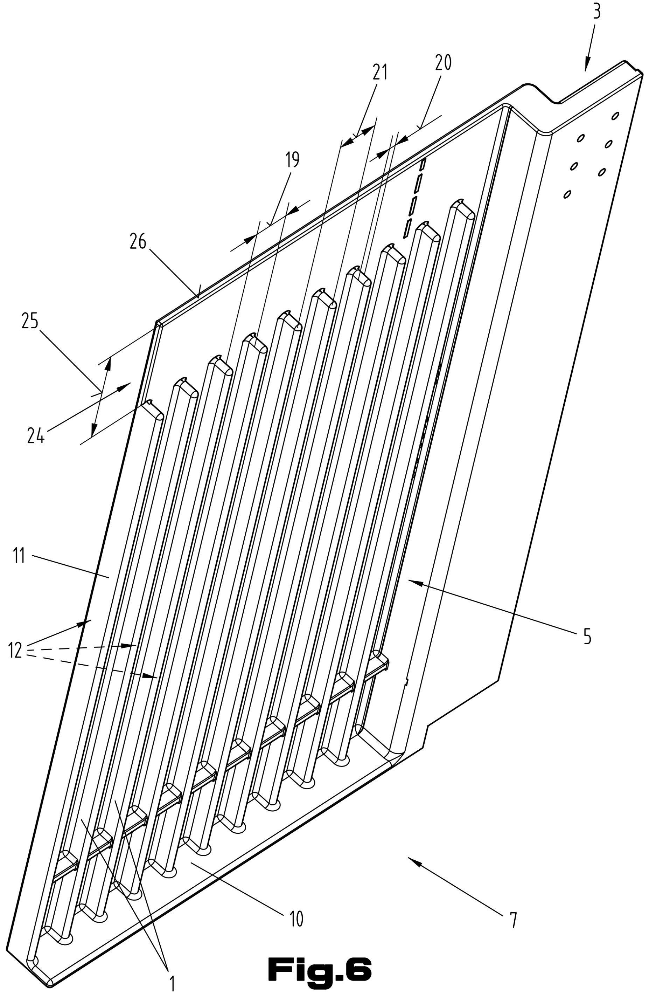

Die Erfindung wird anhand von Zeichnungen näher erläutert, wobei Fig. 1 eine räumliche Ansicht der Vorderseite des Dachreduktionsadapters in seiner unverkleinerten Basisgröße zeigt, Fig. 2 eine räumliche Ansicht der Rückseite des Dachreduktionsadapters in seiner unverkleinerten Basisgröße zeigt, Fig. 3 eine räumliche Ansicht der Rückseite des Dachreduktionsadapters in seiner Größe zeigt, wenn er auf die Breite des freien Raums zugeschnitten ist, und Fig. 4 eine räumliche Ansicht des Daches zeigt, das Dachziegel, ein Photovoltaikmodul und einen Dachreduktionsadapter enthält. Weiters zeigt die Fig. 5 den Dachreduktionsadapter in seiner ursprünglichen Basisgröße in einer möglichen Verwendungslage auf einem Dach in perspektivischer Ansicht auf dessen Oberseite von schräg unten. Die Fig. 6 zeigt den Dachreduktionsadapter gemäß Fig. 5 in perspektivischer Ansicht von schräg oben auf dessen Unterseite.

### Ausführungsbeispiel der Erfindung

Dachreduktionsadapter 7 (Fig. 1, Fig. 2, Fig. 3) zum Überdecken des freien, nicht standardmäßigen breiten Raums zwischen den Reihen der verlegten Dachziegel 8 und dem Raum, in dem sich das nicht standardmäßige Dachelement 9 befindet, bei dem es sich um ein in die Reihe der Dachziegel 8 integriertes Photovoltaik-Dachmodul handelt. Er umfasst einen flachen Teil 2, an dessen Seitenflanke 4 ein Befestigungsteil 3 angeordnet ist, wobei der flache Teil 2 auf seiner Rückseite 5 neun vertikale Lamellen 1 aufweist, zwischen denen sich ein Trennraum 6 befindet, um den überschüssigen flachen Teil 2 abzutrennen und damit die Breite des flachen Teils 2 für eine kontinuierliche Überdeckung des freien Raums zu begrenzen.

Die beiden äußeren Lamellen 1, 11 (Fig. 3) bilden nach dem Abtrennen des überschüssigen flachen Teils 2 eine seitliche Verriegelung 12 gegen das Eindringen von Wasser und Verwehen von Schnee sowie gegen windgetriebenem Regen. Insbesondere bildet wenigstens eine randseitige bzw. äußere Lamelle 1, 11 wenigstens eine Abschottungswand oder wenigstens einen Abschottungssteg an dem in seiner horizontalen Deckbreite 27 (Fig. 5) bedarfsweise anpassbaren Dachreduktionsadapter 7 aus.

Der Befestigungsabschnitt 3 enthält sechs Befestigungsöffnungen 13, die zu je drei in zwei seitlichen Entwässerungsnuten 14 angeordnet sind. Die beiden untersten Befestigungsöffnungen 13 sind blind. Die Befestigungsöffnungen 13 sind mit einem erhöhten Rand versehen, wobei ihr innerer Teil konisch versenkt ist.

Die seitliche Verriegelung 12 (Fig. 3, 5, 6) ist so angeordnet bzw. ausgebildet, dass sie die seitliche Verriegelung, insbesondere in Art eines seitlichen Fügefalzes, eines angrenzenden nicht standardmäßigen Dachelements 9 (Fig. 4) aufnehmen kann, insbesondere übergreifen oder überdecken kann. Wäre der Dachreduktionsadapter 7, gemäß einer nicht dargestellten Variante, rechts vom nicht standardmäßigen Dachelement 9 angeordnet, wäre die seitliche Verriegelung 12 so angeordnet bzw. ausgebildet, dass sie die seitliche Verriegelung des anschließenden Dachziegels 8 aufnehmen könnte, insbesondere dessen seitliche Verriegelung in Art eines seitlichen Fügefalzes aufnehmen kann, insbesondere übergreifen bzw. überdecken kann.

Der flache Teil 2 enthält einen sichtbaren Teil 15, der eben und glatt ist.

Der flache Teil 2 weist auf seiner Rückseite 5 Längsdichtungsrippen 17 auf.

Der flache Teil 2 weist an der Unterseite der Rückseite 5 eine stirnseitige Vorderrippe 10 auf.

Der Dachreduktionsadapter 7 weist an seiner Unterseite eine Aussparung auf, die eine Entwässerungsnut 16 bildet.

Die vertikalen Lamellen 1 haben einen Achsabstand von 22 mm und eine Höhe von 15 mm, wobei sie 55 mm von der Oberkante des Adapters entfernt enden.

Das Dach umfasst eine ganze Reihe von Dachziegeln 8 und ein nicht standardmäßiges Dachelement 9, bei dem es sich um ein in die Reihe der Dachziegel 8 integriertes Photovoltaik-Dachmodul handelt, wobei der freie Raum zwischen einer Reihe von verlegten Dachziegeln 8 und dem Raum, in dem sich das nicht standardmäßige Dachelement 9 befindet, einen Dachreduktionsadapter 7 enthält (Fig. 4).

Der Dachreduktionsadapter 7, der links vom nicht standardmäßigen Dachelement 9 angeordnet ist, überdeckt nach Entfernung seines überschüssigen Teils 18 genau den freien Raum zwischen der Reihe verlegter Dachziegel 8 und dem Raum, in dem sich das nicht standardmäßige Dachelement 9 befindet, wobei er an der Dachkonstruktion befestigt ist und mit seiner seitlichen Verriegelung 12 in die seitliche Nut, insbesondere in einen seitlichen Fügefalz, des nicht standardmäßigen Dachelements 9 passt, insbesondere darin eingreift.

Alternativ, gemäß der nicht dargestellten Variante, würde der Dachreduktionsadapter 7, wenn er rechts vom nicht standardmäßigen Dachelement 9 angeordnet wäre, nach Entfernung seiner überschüssigen Fläche 18 genau den freien Raum zwischen den Reihen der verlegten Dachziegel 8 und dem Raum überdecken, in dem sich das nicht standardmäßige Dachelement 9 befindet, wobei er mit seiner seitlichen Verriegelung 12 an der Dachkonstruktion befestigt wäre und in die seitliche Nut, insbesondere in einen seitlichen Fügefalz, des angrenzenden Dachziegels 8 passen würde, insbesondere darin eingreift.

Hierin verwendete Lage- oder Ausrichtungsangaben können sich auf die Gebrauchs- bzw. Einsatzlage des Dachreduktionsadapters 7 beziehen, also auf dessen Verlegungszustand an einem Dach. Der verwendete Ausdruck "Teil" respektive "-teil" steht synonym für Teilabschnitt bzw. integraler Abschnitt des Dachreduktionsadapters 7. Der Dachreduktionsadapter 7 kann synonym als Adaptions-Dachziegel bezeichnet werden, insbesondere als anpassbarer Dachziegel oder als breitenreduzierbarer Dachziegel bezeichnet werden.

Wie in den Figuren 2 und 5, 6 jeweils ersichtlich ist, kann der Dachreduktionsadapter 7 an dessen Unterseite, insbesondere an der vom sichtbaren Teil 15 abgewandten Rückseite 5, zumindest fünf Lamellen 1, insbesondere fünf bis zwölf Lamellen 1, beispielsweise neun Lamellen 1 aufweisen. Vorzugsweise sind die einzelnen Lamellen 1 in einem einheitlichen, horizontalen Abstand 19 zueinander distanziert und parallel verlaufend ausgerichtet. Der horizontale Abstand 19 zwischen den Lamellen 1 definiert die Trennräume 6 bzw. die Breite der einzelnen Trennsektionen des Dachreduktionsadapters 7. Die Lamellen 1 können leistenartig bzw. stegförmig ausgeführt sein und sind einteilig an der Unterseite des flachen Teils 2 bzw. des Dachreduktionsadapters 7 angeformt.

Der Dachreduktionsadapter 7 kann aus mineralischem Material gebildet sein, insbesondere aus gebrannter Tonerde bestehen oder eine solche enthalten. Die Trennräume 6 bzw. die Lamellen 1 können Anhalts- oder Referenzmarkierungen für einen auszuführenden Trennvorgang zum Abtrennen der überschüssigen Fläche 18 bzw. des überschüssigen Flächenabschnitts ausbilden. Der Trennvorgang kann einen Schneidvorgang umfassen. Die Trennräume 6 können aber auch definierte Sollbruchstellen für eine Schlagabtrennung ausbilden oder aufweisen, insbesondere sobald die stirnseitige Vorderrippe 10 an der gewünschten Stelle wenigstens teilweise manuell entfernt oder eingeschnitten worden ist.

Der in Horizontalrichtung gemessene, lichte Abstand 19 zwischen unmittelbar benachbarten Lamellen 1 kann zwischen 10 mm und 80 mm betragen, insbesondere zwischen 15 mm und 40 mm betragen. Eine in Horizontalrichtung gemessene Dicke 20 der Lamellen 1 kann zwischen 3 mm und 10 mm betragen, insbesondere zwischen 4 mm und 8 mm betragen.

Der vorstehend genannte Achsabstand 21 zwischen unmittelbar benachbarten Lamellen 1 kann zwischen 10 mm und 80 mm betragen, beispielsweise die bereits genannten 22 mm betragen.

Vorzuweise ist der Achsabstand 21 zwischen den benachbarten Lamellen 1 identisch oder im Wesentlichen identisch zu einem Achsabstand 22 zwischen zwei oder mehr vertikalen Entwässerungsnuten 14 im seitlichen Befestigungsteil 3 des Dachreduktionsadapters 7 (Fig. 5). Dementsprechend kann ein horizontales Teilungs- bzw. Abstandsmaß zwischen den Lamellen 1 identisch oder im Wesentlichen identisch zu einem horizontalen Teilungs- bzw. Abstandsmaß zwischen zwei oder mehr vertikalen Entwässerungsnuten 14 im seitlichen Befestigungsteil 3 des Dachreduktionsadapters 7 bemessen sein. Dadurch kann gewährleistet werden, dass zwei oder mehr randseitige Lamellen 1 eines zurechtgeschnittenen Dachreduktionsadapters 7 in die Entwässerungsrinnen 14 eines seitlich angrenzenden bzw. seitlich, beispielsgemäß rechtsseitig, angefügten Dachziegels 8 mit Standardbreite eingreifen können. Dadurch kann in vorteilhafter Weise eine Art von Labyrinth-Abdichtung zwischen dem in seiner Deckbreite 27 angepassten Dachreduktionsadapter 7 und einem seitlich, beispielsgemäß rechtsseitig, angrenzenden Standard-Dachziegel 8 geschaffen werden. Insbesondere kann so auf zuverlässige und rationelle Art und Weise eine gute Abdichtung gegenüber einem unerwünschten Eindringen von Wasser und Schnee, insbesondere gegenüber windgetriebenem Regen oder Schnee erzielt werden.

Die vertikal verlaufenden Lamellen 1 erstrecken sich in Längsrichtung des Dachreduktionsadapters 7. Sie können sich über mehr als 70%, vorzugsweise über mehr als 80% einer Gesamtlänge 23 des Dachreduktionsadapters 7 erstrecken, wobei in einem oberen Überlappungs- bzw. Kopfabschnitt 24 des Dachreduktionsadapters 7 vorzugsweise keine Lamellen vorgesehen sind, indem die Lamellen 1 in einem vorbestimmten Freistellungsmaß 25 vor der Oberkante 26 des Dachreduktionsadapters 7 enden. Dieses Freistellungsmaß 25 kann in Abhängigkeit der Überlappungsweite zwischen übereinander angeordneten Reihen von Dachziegeln zwischen 20 mm bis 80 mm betragen, beispielsgemäß die vorstehend genannten 55 mm betragen.

### Industrielle Verwendbarkeit

Der Dachreduktionsadapter gemäß der Erfindung kann verwendet werden, um nicht standardmäßige Dachelemente in eine Reihe von Dachziegeln mit Standardabmessungen einzufügen.

### Bezugszeichenaufstellung

- 1: vertikale Lamelle
- 2: flacher Teil
- 3: Befestigungsteil
- 4: Seitenflanke
- 5: Rückseite
- 6: Trennraum
- 7: Dachreduktionsadapter
- 8: Dachziegel
- 9: nicht standardmäßiges Dachelement
- 10: stirnseitige Vorderrippe
- 11: äußere Lamelle
- 12: seitliche Verriegelung
- 13: Befestigungsöffnung
- 14: seitliche Entwässerungsnut
- 15: sichtbarer Teil
- 16: Entwässerungsnut
- 17: Längsdichtungsrippe
- 18: überschüssige Fläche
- 19: lichter Abstand
- 20: Dicke
- 21: Achsabstand
- 22: Achsabstand
- 23: Gesamtlänge
- 24: Kopfabschnitt
- 25: Freistellungsmaß
- 26: Oberkante
- 27: Deckbreite

## Patentansprüche

1. Dachreduktionsadapter, insbesondere Dachreduktionsadapter (7) zum Überdecken des freien Raums zwischen mindestens einer Reihe von verlegten Dachziegeln (8) und dem Raum, in dem ein nicht standardmäßiges Dachelement (9) angeordnet ist, bei dem es sich insbesondere um ein in die Reihe der Dachziegel (8) integriertes Photovoltaik-Dachmodul handelt, **dadurch gekennzeichnet, dass** er einen flachen Teil (2) aufweist, an dessen Seitenflanke (4) ein Befestigungsteil (3) angeordnet ist, wobei der flache Teil (2) auf seiner Rückseite (5) mindestens zwei vertikale Lamellen (1) aufweist, zwischen denen sich ein Trennraum (6) zum Abtrennen der überschüssigen Fläche (18) des flachen Teils (2) und damit zum Begrenzen der Breite des flachen Teils (2) auf eine kontinuierliche Überdeckung des freien Raums befindet.

2. Dachreduktionsadapter nach Anspruch 1, **dadurch gekennzeichnet, dass** mindestens eine äußere Lamelle (1, 11) nach dem Abtrennen der überschüssigen Fläche (18) des flachen Teils (2) eine seitliche Verriegelung (12) gegen das Eindringen von Wasser und Verwehen von Schnee sowie gegen windgetriebenem Regen bildet.

3. Dachreduktionsadapter nach einem der Ansprüche 1 und 2, **dadurch gekennzeichnet, dass** der Befestigungsabschnitt (3) mindestens zwei Befestigungsöffnungen (13) aufweist, die in mindestens einer seitlichen Entwässerungsnut (14) angeordnet sind.

4. Dachreduktionsadapter gemäß einem der Ansprüche 2 und 3, **dadurch gekennzeichnet, dass** die seitliche Verriegelung (12) so angeordnet ist, dass sie die seitliche Verriegelung eines angrenzenden Dachziegels (8) aufnehmen kann.

5. Dachreduktionsadapter gemäß einem der Ansprüche 2 und 3, **dadurch gekennzeichnet, dass** die seitliche Verriegelung (12) so angeordnet ist, dass sie die seitliche Verriegelung eines angrenzenden nicht standardmäßigen Dachelements (9) aufnehmen kann.

6. Dachreduktionsadapter gemäß einem der Ansprüche 1 bis 5, **dadurch gekennzeichnet, dass** der flache Teil (2) einen sichtbaren Teil (15) aufweist, der eben und glatt ist.

7. Dachreduktionsadapter gemäß einem der Ansprüche 1 bis 6, **dadurch gekennzeichnet, dass** der flache Teil (2) auf seiner Rückseite (5) eine Längsdichtungsrippe (17) aufweist.

8. Dachreduktionsadapter nach einem der Ansprüche 1 bis 7, **dadurch gekennzeichnet, dass** der flache Teil (2) an der Unterseite der Rückseite (5) eine stirnseitige Vorderrippe (10) aufweist.

9. Dachreduktionsadapter nach einem der Ansprüche 3 bis 8, **dadurch gekennzeichnet, dass** mindestens eine unterste Befestigungsöffnung (13) blind ist.

10. Dachreduktionsadapter gemäß einem der Ansprüche 3 bis 9, **dadurch gekennzeichnet, dass** die Befestigungsöffnung (13) mit einem erhöhten Rand versehen ist, wobei ihr innerer Teil konisch versenkt ist.

11. Dachreduktionsadapter gemäß einem der Ansprüche 1 bis 10, **dadurch gekennzeichnet, dass** er in seinem unteren Teil eine Aussparung aufweist, die eine Entwässerungsnut (16) bildet.

12. Dachreduktionsadapter gemäß einem der Ansprüche 1 bis 11, **dadurch gekennzeichnet, dass** der flache Teil (2) auf seiner Rückseite (5) mindestens fünf der genannten vertikalen Lamellen (1) aufweist und dass sich diese Lamellen (1) über mehr als 70%, vorzugsweise über mehr als 80% einer Gesamtlänge (23) des Dachreduktionsadapters (7) erstrecken und vorzugsweise in einem vorbestimmten Freistellungsmaß (25) vor einer Oberkante (26) des Dachreduktionsadapters (7) enden.

13. Dachreduktionsadapter gemäß einem der Ansprüche 1 bis 12, **dadurch gekennzeichnet, dass** die genannten vertikalen Lamellen (1) mit einem Achsabstand (21) zwischen den benachbarten Lamellen (1) angeordnet sind der identisch oder im Wesentlichen identisch zu einem Achsabstand (22) zwischen zwei oder mehr vertikalen Entwässerungsnuten (14) im seitlichen Befestigungsteil (3) des Dachreduktionsadapters (7) ist.

14. Dach, insbesondere Dach mit mindestens einer Reihe von Dachziegeln (8) und einem nicht standardmäßigen Dachelement (9), bei dem es sich insbesondere um ein in die Reihe von Dachziegeln (8) integriertes Photovoltaik-Dachmodul handelt, wobei der freie Raum zwischen mindestens einer Reihe von verlegten Dachziegeln (8) und dem Raum, in dem sich das nicht standardmäßige Dachelement (9) befindet, einen Dachreduktionsadapter (7) gemäß einem der vorstehenden Ansprüche 1 bis 13 enthält, **dadurch gekennzeichnet, dass** der Dachreduktionsadapter (7) nach Entfernung seiner überschüssigen Fläche (18) den freien Raum zwischen mindestens einer Reihe von verlegten Dachziegeln (8) und dem Raum, in dem das nicht standardmäßige Dachelement (9) angeordnet ist, genau überdeckt, wobei er an der Dachkonstruktion befestigt ist und mit seiner seitlichen Verriegelung (12) in die seitliche Nut des angrenzenden Dachziegels (8) einrastet.

15. Dach, insbesondere Dach mit mindestens einer Reihe von Dachziegeln (8) und einem nicht standardmäßigen Dachelement (9), bei dem es sich insbesondere um ein in die Reihe von Dachziegeln (8) integriertes Photovoltaik-Dachmodul handelt, wobei der freie Raum zwischen mindestens einer Reihe von verlegten Dachziegeln (8) und dem Raum, in dem sich das nicht standardmäßige Dachelement (9) befindet, einen Dachreduktionsadapter (7) gemäß einem der vorstehenden Ansprüche 1 bis 13 enthält, **dadurch gekennzeichnet, dass** der Dachreduktionsadapter (7) nach Entfernung seiner überschüssigen Fläche (18) den freien Raum zwischen mindestens einer Reihe von verlegten Dachziegeln (8) und dem Raum, in dem das nicht standardmäßige Dachelement (9) angeordnet ist, genau überdeckt, wobei er an der Dachkonstruktion befestigt ist und mit seiner seitlichen Verriegelung (12) in die seitliche Nut des angrenzenden nicht standardmäßigen Dachelements (9) einrastet.
